# FASCICULE DE BREVET EUROPEEN

(11) **EP 4 623 707 B1**
(45) Date de publication et mention de la délivrance du brevet: **23.09.2026**
(21) Numéro de dépôt: 25166291.2
(22) Date de dépôt: 26.03.2025
(51) Int. Cl.: A23P 30/20

(54) **FILIÈRE POUR L'EXTRUSION D'UNE MATIÈRE RICHE EN PROTÉINES ET EN EAU, AINSI QUE SYSTÈME DE PRÉPARATION EN CONTINU D'UN PRODUIT ALIMENTAIRE EXTRUDÉ, COMPRENANT UNE TELLE FILIÈRE**
DÜSE ZUM EXTRUDIEREN EINES EIWEISS- UND WASSERREICHEN MATERIALS SOWIE SYSTEM ZUR KONTINUIERLICHEN HERSTELLUNG EINES EXTRUDIERTEN LEBENSMITTELPRODUKTS MIT SOLCH EINER DÜSE
DIE FOR EXTRUDING A PROTEIN-RICH AND WATER-RICH MATERIAL, AND SYSTEM FOR CONTINUOUSLY PREPARING AN EXTRUDED FOOD PRODUCT, COMPRISING SUCH A DIE

(30) Priorité: 27.03.2024 FR 2403105
(43) Date de publication de la demande: 01.10.2025
(73) Titulaire: Clextral, 42700 Firminy (FR)
(72) Inventeur: MOTTAZ, Jérôme, 43200 SAINT-MAURICE DE LIGNON (FR); VARNIER, Nadège, 43600 SAINTE-SIGOLENE (FR); CIZERON, Damien, 42290 SORBIERS (FR); GUIMET, Laurent, 42230 ROCHE-LA-MOLIERE (FR)
(74) Mandataire: Lavoix

(56) Documents cités:
- EP-A1- 3 524 059
- WO-A1-2022/018084
- FR-A1- 3 125 683
- FR-A1- 3 130 517

## Description

La présente invention concerne une filière pour l'extrusion d'une matière riche en protéines et en eau. Elle concerne également un système de préparation en continu d'un produit alimentaire extrudé, comprenant une telle filière d'extrusion.

EP 3 524 059 A1, FR 3 125 683 A1 et FR 3 130 517 A1 illustrent l'arrière-plan technologique.

L'invention s'intéresse aux matériels d'extrusion permettant de forcer une matière, entrainée dans un fourreau d'extrudeur par une ou plusieurs vis, notamment deux vis, entrainées en rotation sur elles-mêmes, à s'écouler à travers une filière d'extrusion, prévue à l'extrémité avale du fourreau d'extrudeur. Les vis et le fourreau d'extrudeur appartiennent typiquement à un extrudeur qui permet d'appliquer un traitement thermomécanique à la matière, dans le sens où cette matière subit à la fois une transformation essentiellement mécanique, par mise en pression et par cisaillement par les vis, et une transformation essentiellement thermique, par régulation de la température le long du fourreau d'extrudeur. La filière d'extrusion permet de mettre en forme, texturer et/ou fibrer la matière extrudée.

L'invention concerne plus spécifiquement l'extrusion de matières riches en protéines et en eau, ainsi que les systèmes associés qui permettent de préparer en continu un produit alimentaire extrudé à partir d'une matière première riche en protéines et en eau. Les protéines de la matière première peuvent être d'origine animale et/ou d'origine végétale et/ou d'une autre origine. Dans tous les cas, les protéines sont mélangées avec une proportion importante d'eau, ainsi que, éventuellement, des matières grasses et des additifs, et le mélange correspondant est soumis au traitement thermomécanique qu'applique l'extrudeur afin d'être chauffé puis gélifié avant d'être mis en forme dans la filière. La texturation, autrement appelée fibration, du produit alimentaire se produit essentiellement dans la filière que la matière sortant du fourreau d'extrudeur traverse en étant poussée par les vis de l'extrudeur. Ce procédé de préparation de produits alimentaires à base de protéines fibrées est connu sous le nom de « CEMH » qui est l'acronyme de l'expression Cuisson-Extrusion en Milieu Humide, ainsi que sous le nom de « HME » qui est l'acronyme de l'expression anglaise « High Moisture Extrusion ».

WO 03/007729 divulgue un procédé CEMH et un matériel d'extrusion associé, dans lesquels une filière est prévue pour refroidir de manière régulée la matière la traversant, en faisant s'écouler cette matière dans un canal qui présente à la fois une grande longueur, typiquement de plusieurs mètres, et une section rectangulaire, un profil de température étant appliqué le long de ce canal de manière à diminuer la température de la matière progressivement entre l'entrée et la sortie du canal. La matière en contact avec la paroi refroidie du canal tend à adhérer à cette paroi, ce qui permet de cisailler l'écoulement laminaire de matière dans le canal. Ce cisaillement contribue à développer des lignes de courant au sein de la pâte de matière et tend à aligner des macromolécules dénaturées dans la direction de l'écoulement. En pratique, le taux de cisaillement et le régime d'écoulement résultent de la géométrie fixe du canal, de sorte que la maitrise de la fibration nécessite que le canal et, par-là, le temps de traitement de la filière soient longs.

Sur le même principe, WO 2019/158605 divulgue une filière d'extrusion de forme tubulaire, dans laquelle la matière s'écoule sous forme d'un flux annulaire qui, suivant sa direction périphérique, est interrompue en une portion basse par une pièce de support de la filière. Cette filière est disposée à l'extrémité aval d'un extrudeur en sortie duquel un flux de matière cylindrique est annularisé par la filière pour former le flux annulaire précité. A cet effet, la filière comporte, en entrée, un divergent en forme de cône dont la pointe est centrée et tournée sur la sortie de l'extrudeur. Le cisaillement appliqué au flux de matière annulaire dans la filière est similaire à celui décrit dans WO 03/007729. Le canal annulaire correspondant de la filière est donc également long.

WO 2022/018084 et WO 2023/006713 proposent une approche alternative, en prévoyant que leur filière comporte un noyau monté en rotation sur lui-même dans une enveloppe tubulaire coaxiale, tout en délimitant, entre ce noyau rotatif et l'enveloppe fixe, un canal annulaire par lequel la matière s'écoule pour traverser la filière. Ces filières permettent une fibration très efficace dans le sens où la matière s'écoulant dans le canal annulaire de la filière est soumise à deux mouvements combinés, à savoir que cette matière est poussée suivant l'axe de la filière par les vis d'un extrudeur en sortie duquel la filière est disposée, et que la matière est cisaillée en périphérie par la rotation du noyau rotatif. Le taux de fibration de la matière est réglable notamment par ajustement de la vitesse avec laquelle le noyau rotatif est entrainé.

Les filières proposées dans WO 2022/018084 et WO 2023/006713 sont donc particulièrement intéressantes, mais induisent des contraintes mécaniques pour certains de leurs composants. En effet, en entrée de la filière, le flux cylindrique de matière poussé par l'extrudeur est annularisé par un cône intégré à l'extrémité amont du noyau rotatif : les efforts axiaux de poussée hydrostatique appliqués à ce cône par la matière sortant de l'extrudeur sont donc substantiels et sont transmis directement au reste du noyau rotatif qui doit donc être bloqué axialement en conséquence, typiquement par des butées à billes. Ces efforts axiaux sont repris par une structure porteuse de la filière, qui risque de se déformer localement, sauf à la dimensionner en conséquence, voire à la fixer au sol, et avec alors l'inconvénient de rendre cette structure porteuse difficilement mobile et donc peu pratique. Par ailleurs, bien que la partie aval du noyau rotatif, disposée à l'extérieur de l'enveloppe fixe, soit supportée et guidée en rotation, le noyau rotatif tend, de par son propre poids et sa longueur, à fléchir au niveau de sa partie amont, autrement dit au niveau du cône précité et du canal annulaire entre l'enveloppe et cette partie amont du noyau rotatif, ce qui peut induire un défaut de coaxialité entre ces derniers et, par-là, une dégradation du réglage de la fibration de la matière traversant la filière.

Le but de la présente invention est de proposer une filière d'extrusion à noyau rotatif, qui soit plus pratique et plus performante.

A cet effet, l'invention a pour objet une filière pour l'extrusion d'une matière riche en protéines et en eau, comportant :
- une enveloppe, qui est tubulaire, en étant centrée sur un axe, et qui est pourvue d'une entrée centrale par laquelle la matière entre à l'intérieur de l'enveloppe pour être poussée à travers la filière, et
- un noyau, qui est coaxial avec l'enveloppe et monté rotatif autour de l'axe par rapport à l'enveloppe,

dans laquelle le noyau inclut une partie amont, s'étendant au moins partiellement à l'intérieur de l'enveloppe de façon que, entre une surface intérieure de l'enveloppe et une surface extérieure du noyau, est délimité un canal ayant une section transversale qui est annulaire et centrée sur l'axe, lequel canal inclut une extrémité amont et une extrémité aval, qui sont opposées l'une à l'autre suivant l'axe et entre lesquelles la matière poussée à travers la filière s'écoule dans le canal en progressant de l'extrémité amont jusqu'à l'extrémité aval du canal, et
dans laquelle le noyau inclut également une partie aval, s'étendant à l'extérieur de l'enveloppe et accouplée à une motorisation de la filière, adaptée pour entrainer le noyau en rotation autour de l'axe,
caractérisée en ce que la filière comporte en outre un divergent mâle qui est :
   - solidarisé fixement à l'enveloppe et reçu coaxialement à l'intérieur de l'enveloppe de sorte que, entre le divergent mâle et l'enveloppe, est délimité un passage, par lequel sont reliées l'entrée centrale de l'enveloppe et l'extrémité amont du canal et qui est façonné de manière que la matière poussée à travers la filière progresse dans le passage, depuis l'entrée centrale de l'enveloppe vers l'extrémité amont du canal, en formant un flux de matière qui diverge de l'axe vers l'aval et se répartit autour de l'axe, et
   - abouté axialement à la partie amont du noyau, en supportant et en guidant en rotation le noyau.

Grace à l'invention, un flux de matière cylindrique, entrant dans la filière, est annularisé par le divergent mâle, en appliquant à ce dernier des efforts de poussée hydrostatique qui ne sont pas repris par le noyau rotatif, mais par l'enveloppe de la filière. Le dimensionnement de la solidarisation fixe entre le divergent mâle et l'enveloppe est aisé, moyennant un simple calcul de mécanique statique, et l'ensemble des contraintes mécaniques résultant de la poussée hydrostatique reste localisé dans une région bien circonscrite de la filière. Les éventuelles déformations induites par ces contraintes mécaniques restent également locales, notamment sans impact significatif sur une structure porteuse de la filière, cette structure porteuse étant ainsi facilement aménageable pour être mobile au sol, par exemple par l'intermédiaire de roulettes. En particulier, aucun effort de poussée hydrostatique n'est transmis à la structure porteuse via le noyau rotatif, ce qui évite d'avoir à rigidifier la partie de la structure porteuse, qui retient axialement le noyau rotatif, typiquement au niveau de la partie aval de ce dernier. Dans le même temps, le divergent mâle intègre une fonction de support et de guidage en rotation pour le noyau rotatif, en coopérant à cet effet avec la partie amont du noyau rotatif, et ce en dehors de l'écoulement de la matière à travers la filière. Il en résulte une excellente maitrise de la coaxialité entre le noyau rotatif et l'enveloppe et, par-là, une excellente maitrise des conditions de fibration de la matière traversant la filière conforme à l'invention. Les performances et la praticité de la filière conforme à l'invention sont ainsi remarquables.

Suivant des caractéristiques additionnelles avantageuses de la filière conforme à l'invention, prises isolément ou selon toutes les combinaisons techniquement possibles :
- Le divergent mâle délimite un logement interne, qui est séparé du passage et dans lequel la partie amont du noyau est reçue en étant supportée et guidée en rotation.
- La filière comporte en outre un palier, qui est centré sur l'axe et qui est radialement interposé entre la partie amont du noyau et une paroi du divergent mâle, délimitant le logement interne.
- Le passage est délimité par une surface extérieure du divergent mâle, qui est conique en étant centrée sur l'axe et divergente vers l'aval.
- L'enveloppe comprend un fourreau de filière, qui délimite ladite surface intérieure de l'enveloppe, et dans laquelle l'enveloppe inclut également un divergent femelle (i) qui est solidarisé fixement au fourreau de filière, (ii) qui est pourvu de l'entrée centrale de l'enveloppe, et (iii) à l'intérieur duquel le divergent mâle est agencé coaxialement de manière à délimiter le passage entre le divergent femelle et le divergent mâle.
- Le divergent mâle est solidarisé fixement à l'enveloppe par des parties respectives du divergent mâle et de l'enveloppe, dont l'une et/ou l'autre sont ajourées pour être franchies par ledit flux de matière.
- Le divergent mâle inclut une bride périphérique (i) par laquelle le divergent mâle est solidarisé fixement à l'enveloppe, (ii) qui s'étend, transversalement à l'axe, en travers dudit flux de matière, et (iii) qui est traversée par le passage via des lumières de la bride périphérique, qui sont réparties autour de l'axe et par lesquelles ledit flux de matière franchit la bride périphérique.
- La bride périphérique est axialement pincée entre le fourreau de filière et le divergent femelle de l'enveloppe.
- La filière comporte également un organe d'étanchéité qui est conçu pour étancher une interface mécanique de découplage rotatif entre le divergent mâle et le noyau.
- L'organe d'étanchéité est (i) reçu dans une gorge périphérique de la partie amont du noyau, et (ii) appliqué radialement contre une bague du divergent mâle, cette bague ayant une surface extérieure qui est affleurante avec ladite surface extérieure de la partie amont du noyau.

L'invention a également pour objet un système de préparation en continu d'un produit alimentaire extrudé, comprenant :
- une matière première qui est riche en protéines et en eau,
- un extrudeur comportant au moins une vis et un fourreau d'extrudeur à l'intérieur duquel ladite au moins une vis est entrainable en rotation de manière à appliquer un traitement thermomécanique à la matière première, et
- une filière, qui est telle que définie ci-dessus et dont l'enveloppe est solidarisée fixement au fourreau d'extrudeur de manière que, en sortie du fourreau d'extrudeur, la matière est poussée par ladite au moins une vis à travers la filière via l'entrée centrale de l'enveloppe.

L'invention sera mieux comprise à la lecture de la description qui va suivre, donnée uniquement à titre d'exemple et faite en se référant aux dessins dans lesquels :
- [Fig. 1] la figure 1 est une vue en perspective et partiellement schématique d'un système conforme à l'invention ;
- [Fig. 2] la figure 2 est une coupe, partiellement schématique, d'une partie du système de la figure 1 selon le plan II de la figure 1 ;
- [Fig. 3] la figure 3 est une vue à plus grande échelle d'une zone encadrée III sur la figure 2 ;
- [Fig. 4] [Fig. 5] les figures 4 et 5 sont des vues en perspective, sous des angles d'observation respectifs différents, d'un divergent mâle appartenant au système de la figure 1 ; et
- [Fig. 6] la figure 6 est une vue à plus grande échelle d'une zone encadrée VI sur la figure 3.

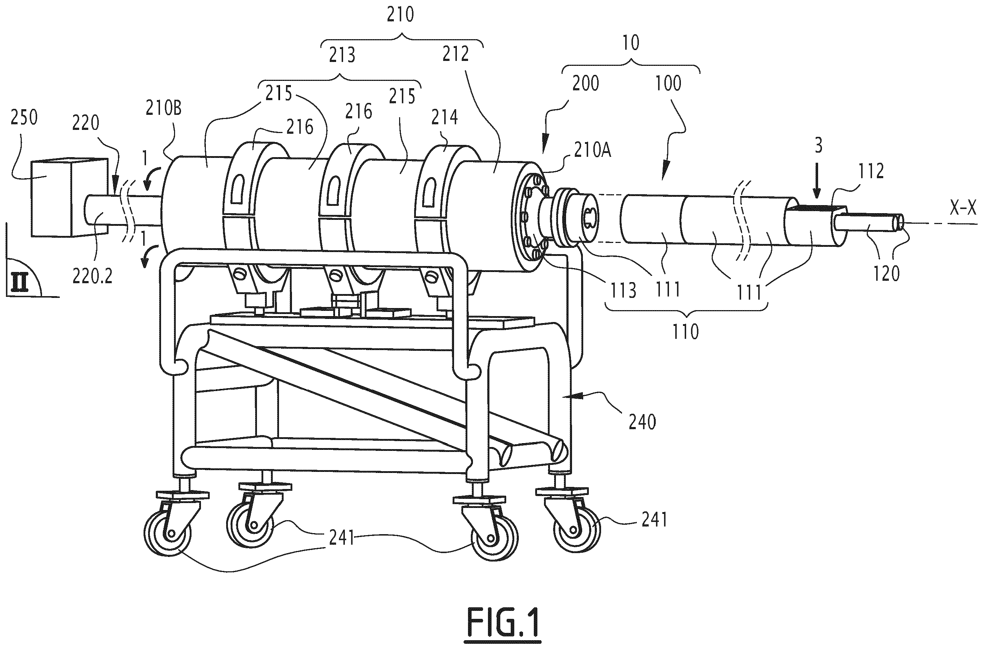

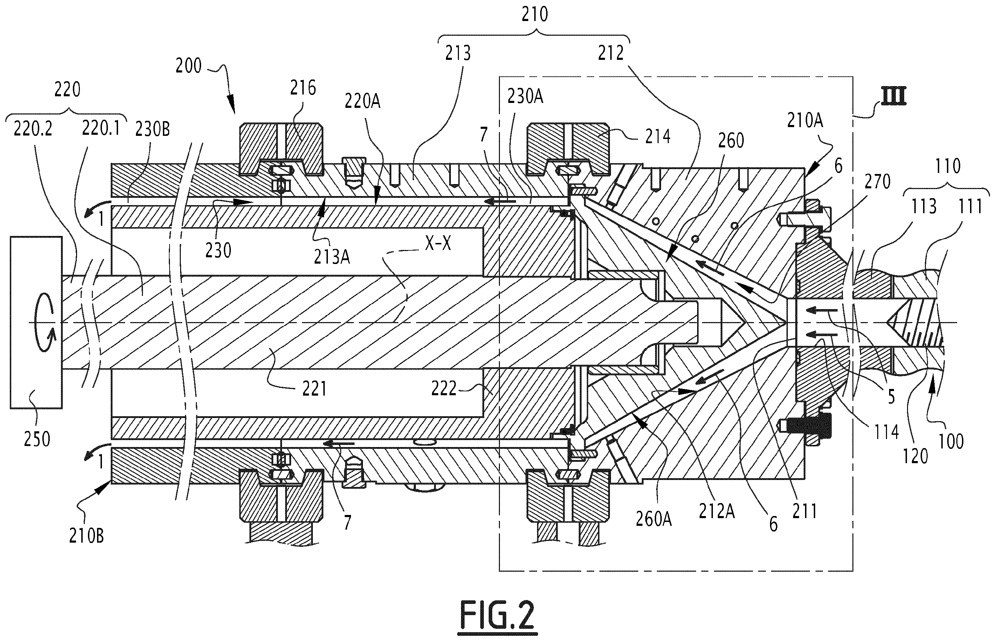

Sur les figures 1 et 2 est représenté de manière schématique un système permettant de préparer en continu, par extrusion, un produit alimentaire 1 destiné à l'alimentation humaine et/ou animale. Ce système comporte principalement une matière première 3 et une machine d'extrusion 10, qui sera détaillée un peu plus bas.

La matière première 3 est riche en protéines et en eau. Plus précisément, la matière première 3, c'est-à-dire l'ensemble des ingrédients qui sont traités par la machine d'extrusion 10 pour former le produit alimentaire 1, contient majoritairement, autrement dit à plus de 50% en poids, de l'eau et des protéines, ainsi que, minoritairement voire marginalement, des fibres alimentaires et/ou de l'amidon, ainsi qu'éventuellement des matières grasses et des additifs.

Le produit alimentaire 1, tel qu'il est obtenu en sortie de la machine d'extrusion 10, est texturé, autrement dit fibré. Le produit alimentaire 1 comprend entre 25 et 90% en poids, de préférence entre 50 et 85% en poids, d'eau et comprend également, en poids sur la totalité de la matière sèche, entre 20 et 90% de protéines.

Les protéines de la matière première 3 et donc du produit alimentaire 1 sont d'origine végétale et/ou d'origine animale et/ou d'au moins une autre origine. Les protéines d'origine végétale proviennent par exemple des légumineuses, des céréales et/ou des protéagineux (soja, blé, pois, maïs, pois chiches, lentilles, etc.). Les protéines d'origine animale sont par exemple issues du poisson, de la viande, du lait et/ou des œufs. La ou les autres origines de protéines sont par exemple les champignons, les algues, les insectes, la viande cellulaire, etc.

Le produit alimentaire 1 comprend également, en poids sur la totalité de la matière sèche, entre 0 et 50% de fibres alimentaires et entre 0 et 50% d'amidon, la somme des fibres alimentaires et/ou d'amidon étant préférentiellement supérieure à 0,01%. Les fibres alimentaires sont par exemple des fibres d'origine végétale et l'amidon est par exemple d'origine végétale, à l'état natif, prégélatinisé ou modifié.

Le produit alimentaire 1 peut aussi comprendre, en poids sur la totalité de la matière sèche, entre 0 et 20% de matières grasses, notamment d'origine végétale et/ou animale, et/ou des ingrédients fonctionnels, comme les lécithines, les caséinates ou d'autres ingrédients.

Comme bien visible sur les figures 1 et 2, la machine d'extrusion 10 comporte principalement un extrudeur 100 et une filière 200 qui sera détaillée plus loin.

Comme représenté schématiquement sur la figure 1, l'extrudeur 100 comporte un fourreau 110 de forme allongée, qui s'étend le long d'un axe géométrique X-X et qui est centré sur cet axe. A l'intérieur du fourreau 110, deux vis 120 s'étendent de manière parallèle à l'axe X-X, en étant reçues dans un alésage longitudinal central du fourreau, centré sur l'axe X-X. En pratique, de manière connue en soi, chaque vis 120 inclut par exemple un arbre de vis central sur lequel est monté un ensemble d'éléments de vis. Dans tous les cas, les deux vis 120 s'étendent ici de part et d'autre de l'axe X-X, tout en étant interpénétrantes, l'alésage du fourreau 110 présentant ainsi un profil transversal bilobé.

Les vis 120 sont prévues pour être entrainées en rotation sur elles-mêmes, autour de leur axe central, par une unité motrice, non représentée sur les figures, en prise avec l'extrémité amont des vis 120, à savoir celle de droite sur la figure 1, émergeant à l'extérieur du fourreau 110.

Les vis 120 sont conçues, de par leur profil fileté, pour entrainer la matière première 3 à l'intérieur du fourreau 110 selon l'axe X-X, depuis une partie amont du fourreau 110, dans laquelle les ingrédients de la matière première 3 sont introduits à l'intérieur de l'alésage longitudinal central du fourreau 110, jusqu'à l'extrémité aval du fourreau 110, les termes « amont » et « aval » étant orientés dans le sens de progression de la matière dans la machine d'extrusion 10 sous l'action des vis 120, ce sens de progression étant de la droite vers la gauche sur les figures 1 à 3 et 6.

En pratique, le fourreau 110 comporte ici plusieurs éléments modulaires 111 qui, comme indiqué schématiquement sur la figure 1, se succèdent le long de l'axe X-X. Chacun des éléments modulaires 111 délimite intérieurement une partie correspondante de l'alésage longitudinal central du fourreau 110, ces parties d'alésage étant dans le prolongement les unes des autres selon l'axe X-X à l'état assemblé des éléments modulaires 111, comme sur la figure 1. Sur la figure 1, l'élément modulaire qui est le plus en aval parmi les éléments modulaires 111 n'est que partiellement représenté, ce qui permet d'observer la partie d'alésage correspondante, étant noté que, pour des raisons de visibilité, les vis 120 ne sont pas non plus représentées dans cette partie d'alésage.

Dans l'exemple de réalisation considéré sur les figures, l'élément modulaire du fourreau 110, le plus en amont parmi les éléments modulaires 111, permet d'introduire, à l'intérieur de sa partie d'alésage, les ingrédients de la matière première 3. A cet effet, de manière connue en soi et non détaillée ici, cet élément modulaire le plus en amont est pourvu d'un orifice 112 qui, transversalement à l'axe X-X, ouvre sur l'extérieur, ici vers le haut, la partie d'alésage de cet élément modulaire le plus en amont. Plus généralement, on comprend que, parmi les différents éléments modulaires 111 du fourreau 110, un ou plusieurs d'entre eux permettent d'introduire, à l'intérieur de l'alésage longitudinal central du fourreau 110, les ingrédients, solides et/ou liquides, de la matière première 3 aux fins de leur traitement par la machine d'extrusion 10.

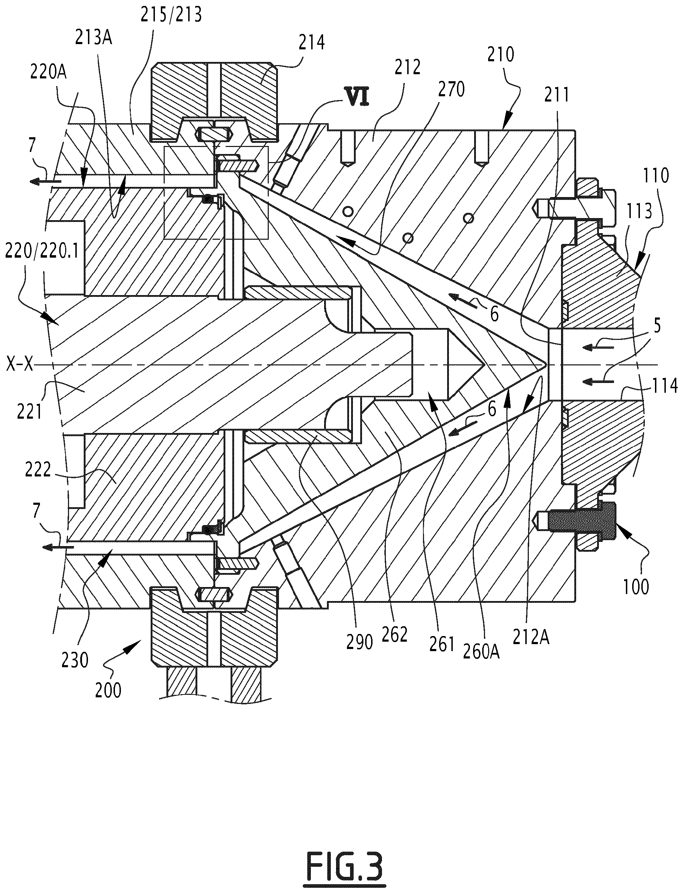

Comme évoqué dans la partie introductive du présent document, les vis 120 sont conçues pour, en plus d'entrainer la matière à extruder, cisailler et mettre en pression la matière première 3, de manière à la transformer de manière essentiellement mécanique. Cet aspect de l'extrudeur 100 étant bien connu dans le domaine, il ne sera pas décrit ici plus avant. De même, également comme évoqué dans la partie introductive, le fourreau 110 est avantageusement conçu pour réguler la température de la matière à extruder le long du fourreau 110 de façon à transformer cette matière de manière essentiellement thermique. En effet, tout ou partie des éléments modulaires 111 du fourreau 110 sont thermorégulés et/ou permettent d'injecter dans le fourreau 110 de la vapeur et/ou permettent de dégazer la matière en cours d'extrusion dans le fourreau 110. Là encore, cet aspect de l'extrudeur 100 étant bien connu dans le domaine, il ne sera pas décrit ici plus avant. Plus globalement, le fourreau 110 et les vis 120 sont prévus pour appliquer un traitement thermomécanique à la matière première 3 au fur et à mesure de la progression de cette matière de l'extrémité amont du fourreau 110 jusqu'à l'extrémité aval du fourreau 110. La matière résultant de ce traitement thermomécanique et sortant du fourreau 110 est référencée 5 sur les figures 2 et 3.

À son extrémité aval, le fourreau 110 comprend avantageusement un élément terminal 113, couramment appelé « plaque avant » dans le domaine. L'élément terminal 113 est rapporté fixement au reste du fourreau 110, ici à l'extrémité aval de l'élément modulaire le plus en aval, parmi les éléments modulaires 111, du fourreau 110. Comme bien visible sur les figures 2 et 3, l'élément terminal 113 délimite intérieurement un alésage 114 traversant, qui est centré sur l'axe X-X et qui forme une partie terminale aval de l'alésage longitudinal central du fourreau 110, en recevant, le cas échéant, l'extrémité aval des vis 120. Ici, l'alésage 114 de l'élément terminal 113 s'étend dans le prolongement axial de la partie d'alésage de l'élément modulaire le plus en aval parmi les éléments modulaires 111. Cet alésage 114 est adapté pour canaliser la matière 5 poussée vers l'aval par les vis 120, de manière à assurer une mise en pression et un taux de remplissage appropriés pour l'alésage longitudinal central du fourreau 110. À cet effet, l'alésage 114 est, par exemple, au moins partiellement étranglé vers l'aval, ici dans un plan perpendiculaire au plan des figures 2 et 3, et/ou pourvu d'une grille transversale, ici non représentée aux figures. Cet aspect de l'extrudeur 100 n'étant pas limitatif de l'invention, il ne sera pas décrit ici plus avant.

En s'intéressant maintenant plus spécifiquement à la filière 200, cette filière 200 est conçue pour être traversée par la matière 5 aux fins de l'extrusion de cette dernière. À l'état assemblé de la machine d'extrusion 10, la filière 200 est agencée à l'extrémité aval du fourreau 110 de l'extrudeur 100 de sorte que la matière 5 sortant du fourreau 110 est forcée, sous l'action des vis 120 de l'extrudeur 100, de s'écouler à travers la filière 200.

Comme bien visible sur les figures 1 à 3, la filière 200 comporte une enveloppe 210 qui est tubulaire, en étant centrée sur un axe géométrique qui, à l'état assemblé de la machine d'extrusion 10, est confondu avec l'axe X-X et qui sera donc considéré comme étant l'axe X-X par la suite. L'enveloppe 210 présente ainsi deux extrémités opposées suivant l'axe X-X, à savoir une extrémité amont 210A et une extrémité aval 210B. L'enveloppe 210 délimite un volume interne qui, de par la forme tubulaire de l'enveloppe 210, est essentiellement fermé tout autour de l'axe X-X par l'enveloppe 210, tout en débouchant axialement sur l'extérieur de l'enveloppe 210 aux extrémités amont 210A et aval 210B de cette dernière.

À l'état assemblé de la machine d'extrusion 10, le fourreau 110 de l'extrudeur 100 et l'enveloppe 210 de la figure 200 sont solidarisés fixement l'un à l'autre. En pratique, l'enveloppe 210, en particulier son extrémité amont 210A, est à cet effet solidarisée fixement, de manière directe ou indirecte, à une partie aval du fourreau 110, notamment, comme ici, à l'élément terminal 113 de ce fourreau.

À son extrémité amont 210A, l'enveloppe 210 est pourvue d'une entrée centrale 211, qui est centrée sur l'axe X-X et par laquelle passe l'axe X-X. Cette entrée centrale 211 relie le volume interne de l'enveloppe 210 avec l'extérieur de l'enveloppe 210. À l'état assemblé de la machine d'extrusion 10, la matière 5 poussée par les vis 120 de l'extrudeur 100 entre dans le volume interne de l'enveloppe 210 par l'entrée centrale 211 pour être poussée à travers la filière 200 : dans la forme de réalisation considérée ici, l'entrée centrale 211 est aboutée à l'alésage 114 de l'élément terminal 113 du fourreau 110, plus précisément à l'extrémité aval de cet alésage 114, afin de permettre l'écoulement de la matière 5 entre l'alésage 114 et l'entrée centrale 211. En pratique, la section transversale de l'entrée centrale 211, c'est-à-dire la section de cette dernière dans un plan perpendiculaire à l'axe X-X, est avantageusement ajustée à celle de l'extrémité aval de l'alésage longitudinal central du fourreau 110, ici à celle de l'extrémité aval de l'alésage 114, notamment pour limiter les pertes de charge et les perturbations dans l'écoulement de la matière. À titre préférentiel, la section transversale de l'entrée centrale 211 présente un contour circulaire, centré sur l'axe X-X.

Dans la forme de réalisation considérée sur les figures, l'enveloppe 210 comprend un divergent femelle 212 et un fourreau 213, qui se succèdent l'un à l'autre suivant l'axe X-X, le fourreau 213 étant disposé en aval du divergent femelle 212, comme bien visible sur les figures 1 à 3. Le divergent femelle 212 et le fourreau 213 présentent chacun une forme tubulaire, dans le sens où ils délimitent des volumes internes respectifs correspondant respectivement à des sous-volumes du volume interne de l'enveloppe 210. Le divergent femelle 212 et le fourreau 213 sont solidarisés fixement l'un à l'autre, ici par un collier de fixation 214.

Le divergent femelle 212 présente l'extrémité amont 210A de l'enveloppe 210, en étant pourvu de l'entrée centrale 211. Ici, à l'état assemblé de la machine d'extrusion 10, l'élément terminal 113 du fourreau 110 de l'extrudeur 100 est solidarisé à l'enveloppe 210 de la filière 200 par l'intermédiaire du divergent femelle 212, l'élément terminal 113 étant par exemple boulonné sur le divergent femelle 212.

Dans tous les cas, le divergent femelle 212 délimite une surface intérieure 212A, qui ferme le volume interne du divergent femelle 212 tout autour de l'axe X-X et par laquelle sont reliés suivant l'axe X-X l'entrée centrale 211 avec le volume interne du fourreau 213 : comme bien visible sur les figures 2 et 3, cette surface intérieure 212A du divergent femelle 212 est centrée sur l'axe X-X tout en s'évasant vers l'aval. Suivant une forme de réalisation pratique, mise en œuvre aux figures, cette surface intérieure 212A est tronconique, en étant centrée sur l'axe X-X et divergente vers l'aval. Ici, cette surface intérieure 212A est intégralement lisse.

Le fourreau 213 de l'enveloppe 210 délimite quant à lui une surface intérieure 213A, qui ferme le volume interne du fourreau 213 tout autour de l'axe X-X et par laquelle sont reliés suivant l'axe X-X le volume interne du divergent femelle 212 avec l'extérieur de l'enveloppe 210: dans la forme de réalisation considérée aux figures, cette surface intérieure 213A du fourreau 213 est cylindrique à base circulaire, centrée sur l'axe X-X. Ici, la surface intérieure 213A s'étend sur toute l'étendue axiale du fourreau 213 et débouche sur l'extrémité aval 210B de l'enveloppe 210, cette extrémité aval 210B étant ainsi présentée par le fourreau 213.

Dans la forme de réalisation considérée ici, et comme bien visible sur les figures 1 et 2, le fourreau 213 comporte des éléments modulaires 215 qui se succèdent le long de l'axe X-X. Dans l'exemple illustré, ces éléments modulaires 215 sont au nombre de trois. Chacun des éléments modulaires 215 délimite intérieurement une partie correspondante du volume interne du fourreau 213 et donc délimite une partie correspondante de la surface intérieure 213A. En pratique, ces éléments modulaires 215 sont assemblés deux à deux, par exemple par des colliers de fixation 216.

Par ailleurs, on notera que les spécificités de la face extérieure de l'enveloppe 210 ne sont pas limitatives.

En plus de l'enveloppe 210, la filière 200 comporte un noyau 220. Comme bien visible sur les figures 1 et 2, le noyau 220 présente une forme allongée, centrée sur un axe géométrique qui, à l'état assemblé de la machine d'extrusion 10, est confondu avec l'axe X-X et qui sera donc considéré comme étant l'axe X-X par la suite. Au sein de la filière 200, le noyau 220 est coaxial avec l'enveloppe 210, en étant partiellement agencé à l'intérieur de cette dernière, autrement dit dans le volume interne de l'enveloppe 210. Le noyau 220 inclut ainsi deux parties se succédant suivant l'axe X-X, à savoir une partie amont 220.1, qui s'étend au moins partiellement à l'intérieur de l'enveloppe 210, autrement dit dans le volume interne de cette dernière, et une partie aval 220.2, qui s'étend en totalité à l'extérieur de l'enveloppe 210. Dans la forme de réalisation considérée sur les figures, la partie amont 220.1 du noyau 220 s'étend essentiellement à l'intérieur de l'enveloppe 210, tout en émergeant, vers l'aval, de l'extrémité aval 210B de l'enveloppe 210.

Dans tous les cas, la partie amont 220.1 du noyau 220 est pourvue d'une surface extérieure 220A, c'est-à-dire une surface tournée radialement à l'opposé de l'axe X-X, qui s'étend sur toute l'étendue axiale de la partie amont 220.1 du noyau 220 et qui est agencée à la fois en regard, radialement à l'axe X-X, et coaxialement avec la surface intérieure 213A du fourreau 213 de l'enveloppe 210 : ici, cette surface extérieure 220A du noyau 220 est cylindrique à base circulaire, centrée sur l'axe X-X.

Dans tous les cas, la surface intérieure 213A de l'enveloppe 210 et la surface extérieure 220A du noyau 220 délimitent radialement entre elles un canal 230 ayant une section transversale, c'est-à-dire une section en coupe perpendiculaire à l'axe X-X, qui est annulaire et centrée sur l'axe X-X. Ce canal 230 s'étend ainsi suivant l'axe X-X depuis une extrémité amont 230A du canal jusqu'à une extrémité aval 230B du canal, cette extrémité amont 230A étant axialement tournée vers l'extrudeur 100 à l'état assemblé de la machine d'extrusion 10. La surface intérieure 213A de l'enveloppe 210 délimite le canal 230 en formant la périphérie extérieure de ce canal, et ce de l'extrémité amont 230A à l'extrémité aval 230B de ce canal 230. La surface extérieure 220A du noyau 220 délimite le canal 230 en formant la périphérie intérieure de ce canal, et ce depuis l'extrémité amont 230A jusqu'à l'extrémité aval 230B du canal. Le canal 230 s'étend continument autour de l'axe X-X, c'est-à-dire sur 360°. En service, la matière 5 sortant du fourreau 110 s'écoule dans le canal 230 pour traverser la filière 200, en progressant dans le canal 230 de l'extrémité amont 230A jusqu'à l'extrémité aval 230B du canal 230. Le flux de matière s'écoulant dans le canal 230, qui est référencé 7 sur les figures 2 et 3, présente ainsi une forme annulaire, centrée sur l'axe X-X.

Dans la forme de réalisation considérée aux figures, dans laquelle la surface intérieure 213A de l'enveloppe 210 et la surface extérieure 220A du noyau 220 sont chacune cylindriques à base circulaire. On comprend que la section transversale annulaire du canal 230 est constante de son extrémité amont 230A à son extrémité aval 230B.

En pratique, comme représenté sur la figure 1, la filière 200 comprend une structure porteuse 240, sur laquelle l'enveloppe 210 repose fixement et qui est appuyée au sol. Cette structure porteuse 240 est avantageusement munie de roulettes 241 par lesquelles la structure porteuse 240 repose sur le sol, ces roulettes 241 permettant, lorsque la filière 200 n'est pas en service, de déplacer cette filière par rapport au sol, par exemple pour des raisons de nettoyage, de maintenance ou d'utilisation successive vis-à-vis de plusieurs extrudeurs. Bien entendu, la forme de la réalisation de la structure porteuse 240 n'est pas limitative.

Quelle que soit sa forme de réalisation, le noyau 220 n'est pas, à la différence de l'enveloppe 210, prévu fixe par rapport à la structure porteuse 240 et par rapport au fourreau 110 de l'extrudeur 100 à l'état assemblé de la machine d'extrusion 10, mais est prévu rotatif autour de l'axe X-X. Ainsi, au sein de la filière 200, le noyau 220 est monté rotatif autour de l'axe X-X par rapport à l'enveloppe 210. La surface extérieure 220A du noyau 220 est ainsi tournante sur elle-même autour de l'axe X-X.

Aux fins de l'entrainement du noyau 220 en rotation autour de l'axe X-X, la filière 200 comprend une motorisation 250 qui est accouplée à la partie aval 220.2 du noyau 220. En pratique, les spécificités techniques de la motorisation 250 ne sont pas limitatives. A titre d'exemple, cette motorisation 250 est électrique et sa sortie motrice est, à l'extérieur de l'enveloppe 210, en prise, directe ou indirecte, avec la partie aval 220.2 du noyau 220. Suivant un agencement pratique, qui n'apparait pas aux figures, la motorisation 250 repose avantageusement sur la structure porteuse 240, les composants fixes de cette motorisation étant liés fixement à cette structure porteuse 240.

A titre d'exemple d'une réalisation possible du noyau 220, qui est mise en œuvre sur les figures, le noyau 220 comprend un arbre central 221 et un organe d'étagement 222, solidarisés fixement l'un à l'autre. L'arbre central 221 est centré sur l'axe X-X et une partie amont de cet arbre central 221, qui appartient à la partie amont 220.1 du noyau 220, est agencée à l'intérieur de l'enveloppe 210, tandis qu'une partie aval de l'arbre central 221, appartenant à la partie aval 220.2 du noyau 220, est située à l'extérieur de l'enveloppe 210 où cette partie aval de l'arbre central est accouplée avec la motorisation 250. L'organe d'étagement 222 appartient quant à lui à la partie amont 220.1 du noyau 220 et est agencé essentiellement à l'intérieur de l'enveloppe 210, en étant fixement solidaire de la partie amont de l'arbre central 221. L'organe d'étagement 222 délimite la surface extérieure 220A.

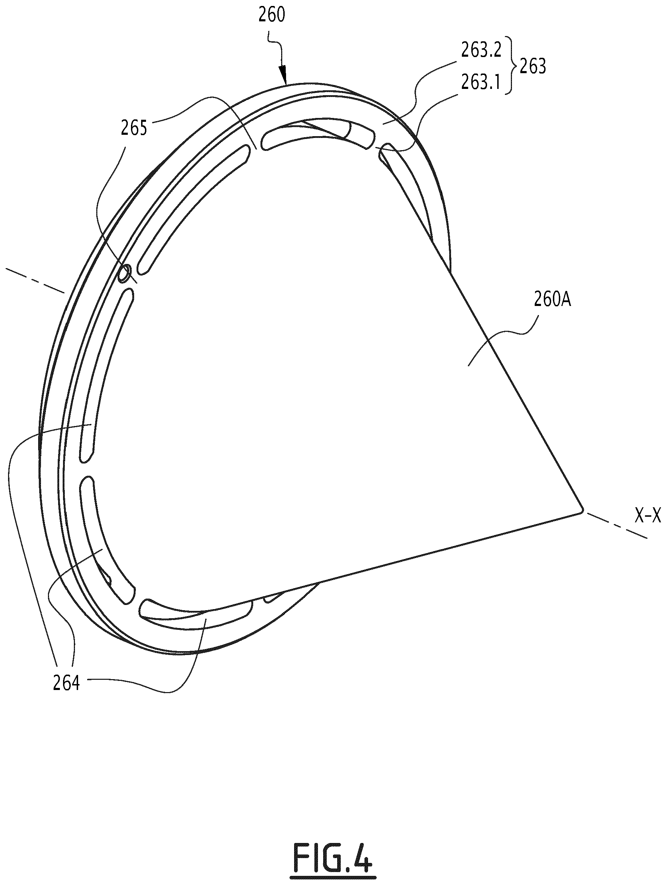

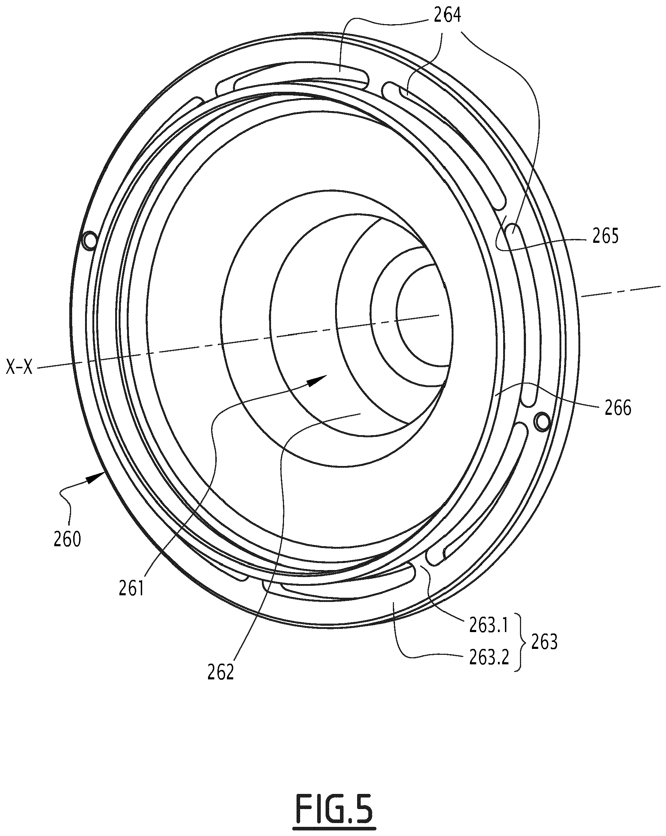

Comme bien visible sur les figures 2 et 3, la filière 200 comporte en outre un divergent mâle 260 qui est représenté seul sur les figures 4 et 5. Au sein de la filière 200, ce divergent mâle 260 est agencé coaxialement à l'intérieur de l'enveloppe 210, plus précisément essentiellement dans le volume interne de cette enveloppe 210, et est situé à la fois immédiatement en amont du noyau 220 et en aval de l'entrée centrale 211.

Comme bien visible sur les figures 4 et 5, le divergent mâle 260 se présente sous la forme d'un chapeau chinois, centré sur l'axe X-X. Ainsi, comme bien visible sur la figure 4, sur son côté amont, c'est-à-dire son côté axial tourné vers l'entrée centrale 211, le divergent mâle 260 s'évase progressivement vers l'aval, depuis une extrémité amont pointue du divergent mâle 260, centrée sur l'axe X-X : dans la forme de réalisation considérée ici, le divergent mâle 260 délimite, sur son côté amont, une surface extérieure 260A qui est conique en étant centrée sur l'axe X-X et divergente vers l'aval. Dans l'exemple envisagé aux figures, cette surface extérieure 260A est intégralement lisse, comme bien visible sur la figure 4. Comme bien visible sur la figure 5, sur son côté aval, c'est-à-dire son côté axial tourné à l'opposé de l'entrée centrale 211, le divergent mâle 260 est creux et délimite un logement interne 261, qui est centré sur l'axe X-X et qui débouche axialement sur le côté aval du divergent mâle 260. Le logement interne 261 ne débouche pas sur la surface extérieure 260A qui est totalement séparée du logement interne 261 par une paroi pleine 262 du divergent mâle 260, qui est globalement conique et qui délimite le logement interne 261. Dans la forme de réalisation considérée ici, le logement interne 261 est avantageusement étagé par rapport à l'axe X-X.

Suivant un aspect avantageux dont l'intérêt apparaitra plus loin, le divergent mâle 260 est pourvu d'une bride périphérique 263, qui est centrée sur l'axe X-X et qui court tout autour de cet axe X-X. Comme bien visible sur les figures 4 et 5, la bride périphérique 263 s'étend depuis la paroi pleine 262, en étant radialement saillante de la surface extérieure 260A. Ici, la bride périphérique 263 est axialement située à l'extrémité aval du divergent mâle 260, autrement dit au niveau axial où la paroi pleine 262 présente son plus grand diamètre extérieur. Dans tous les cas, comme bien visible sur les figures 4 et 5, la bride périphérique 263 est pourvue de lumières 264 qui traversent chacune axialement de part en part la bride périphérique 263, plus précisément une partie intérieure 263.1 de cette dernière, c'est-à-dire une partie tournée vers l'axe X-X. Les lumières 264 sont réparties autour de l'axe X-X, avantageusement de manière régulière. Ici, les lumières 264 présentent chacune un profil arqué, centré sur l'axe X-X. Entre les deux lumières 264 de chaque paire de lumières adjacentes l'une à l'autre autour de l'axe X-X, la bride périphérique 263 inclut une patte 265 qui, autour de l'axe X-X, sépare l'une de l'autre les deux lumières de la paire de lumières considérée et qui, radialement à l'axe X-X, relie à la paroi 262 une partie extérieure 263.2 de la bride périphérique 263, entourant extérieurement les lumières 264.

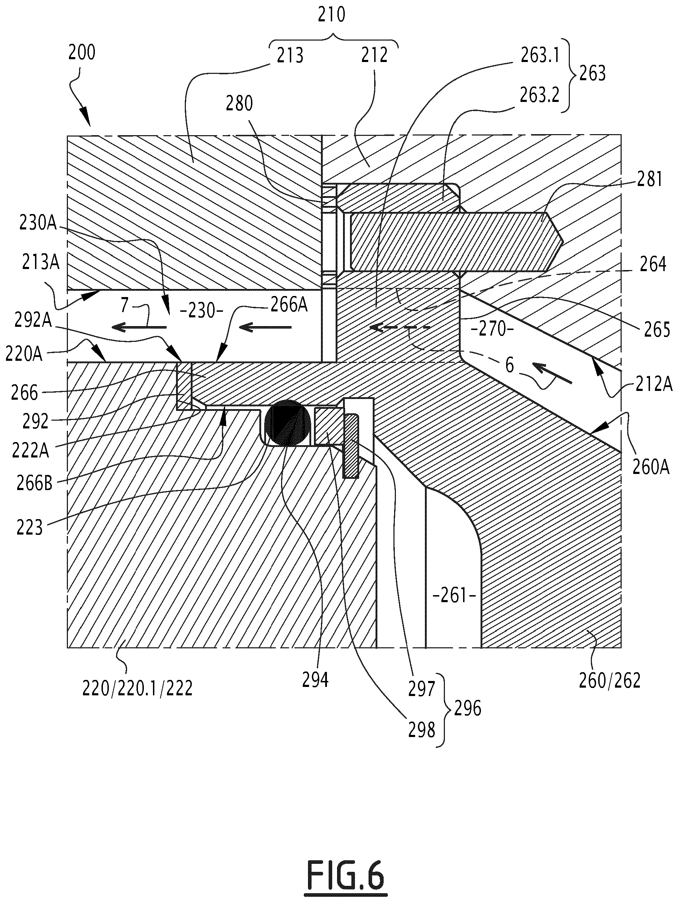

Suivant un autre aspect avantageux dont l'intérêt apparaitra également plus loin, le divergent mâle 260 comporte, à son extrémité aval, une bague 266, ou excroissance cylindrique, qui est centrée sur l'axe X-X et qui s'étend axialement en saillie vers l'aval depuis la paroi pleine 262, plus précisément depuis le chant axial aval de cette paroi pleine. Comme bien visible sur les figures 5 et 6, la bague 266 est inscrite à l'intérieur du contour intérieur de la bride périphérique 263 et est pourvue d'une surface extérieure 266A qui est ici à la fois cylindrique à base circulaire, centrée sur l'axe X-X, et affleurante des bords respectifs des lumières 264, radialement tournés vers l'axe X-X.

Comme bien visible sur les figures 2, 3 et 6, le divergent mâle 260 est, au sein de la filière 200, solidarisé fixement à l'enveloppe 210, en étant reçu dans le volume interne de l'enveloppe 210, de sorte que, entre le divergent mâle 260 et l'enveloppe 210, est délimité un passage 270 par lequel sont reliées l'une à l'autre l'entrée centrale 211 de l'enveloppe 210 et l'extrémité amont 230A du canal 230. Dans la forme de réalisation considérée ici, le divergent mâle 260 est ainsi essentiellement logé à l'intérieur du divergent femelle 212 de l'enveloppe 210 et le passage 270 est essentiellement délimité entre la surface intérieure 212A du divergent femelle 212 et la surface extérieure 260A du divergent mâle 260 : la matière poussée à travers la filière 200 progresse dans ce passage 270, depuis l'entrée centrale 211 vers l'extrémité amont 230A du canal 230, en formant un flux de matière 6 de forme globalement tronconique, centrée sur l'axe X-X et divergente vers l'aval. Plus généralement, le passage 270 délimité entre le divergent mâle 260 et l'enveloppe 210 est façonné de manière que le flux de matière 6, formé par la matière progressant dans ce passage 270 depuis l'entrée centrale 211 de l'enveloppe 210 jusqu'à l'extrémité amont 230A du canal 230, diverge de l'axe X-X vers l'aval et se répartit autour de l'axe X-X. Le passage 270 permet ainsi d'annulariser le flux cylindrique de la matière 5 entrant dans la filière 200.

Dans la forme de réalisation considérée ici, la solidarisation fixe entre le divergent mâle 260 et l'enveloppe 210 est avantageusement réalisée par la bride périphérique 263 du divergent mâle 260. La fixation de la bride périphérique 263 à l'enveloppe 210 est préférentiellement réalisée par pincement axial de la bride périphérique 263, en particulier la partie extérieure 263.2 de cette dernière, entre le divergent femelle 212 et le fourreau 213 de l'enveloppe 210, avantageusement avec interposition axiale d'une garniture d'étanchéité 280, comme bien visible à la figure 6. À cet effet, l'un et/ou l'autre du divergent femelle 212 et du fourreau 213 sont pourvus d'une gorge périphérique dans laquelle la bride périphérique 263 est assemblée par embrèvement, comme bien visible sur la figure 6. La fixation entre la bride périphérique 263 et l'enveloppe 210 est avantageusement renforcée par un ou plusieurs pions 281, qui sont rapportés axialement à travers la bride périphérique 263, en particulier sa partie extérieure 263.2, et qui permettent d'améliorer à la fois le positionnement transversalement à l'axe X-X et le blocage en rotation autour de cet axe X-X entre la bride périphérique 263 et l'enveloppe 210.

On comprend que, dans la forme de réalisation considérée aux figures, la bride périphérique 263, en particulier sa partie intérieure 263.1, se retrouve sur le passage 270, en s'étendant, transversalement à l'axe X-X, en travers du flux de matière 6 s'écoulant dans le passage 270. Ceci étant, les lumières 264 permettent à la bride périphérique 263 d'être traversée par le passage 270, dans le sens où la bride périphérique 263 est franchissable par le flux de matière 6 via ces lumières 264, comme indiqué en pointillés sur la figure 6. On comprend donc que la section d'écoulement des lumières 264 est préférentiellement la plus grande possible.

Plus généralement, dans le prolongement des considérations immédiatement ci-dessus, on comprend que le passage 270 est conçu pour traverser l'une et/ou l'autre de parties, qui appartiennent respectivement au divergent mâle 260 et à l'enveloppe 210 et par lesquelles le divergent mâle 260 est solidarisé fixement à l'enveloppe 210. A cet effet, l'une et/ou l'autre des deux parties précitées appartenant respectivement au divergent mâle 260 et à l'enveloppe 210 sont ajourées de part en part par une ou plusieurs lumières fonctionnellement analogues aux lumières 264 qui, dans l'exemple illustré aux figures, traversent chacune axialement de part en part la bride périphérique 263 : cette ou ces lumières permettent au flux de matière 6 s'écoulant dans le passage 270 de franchir les deux parties précitées appartenant respectivement au divergent mâle 260 et à l'enveloppe 210.

Dans tous les cas, comme le divergent mâle 260 est solidarisé fixement à l'enveloppe 210, le noyau 220 est rotatif autour de l'axe X-X par rapport au divergent mâle 260. Comme bien visible sur les figures 2 et 3, vis-à-vis du noyau 220, le divergent mâle 260 est abouté axialement à la partie amont 220.1 du noyau 220, en supportant et en guidant en rotation le noyau 220, et ce en dehors du passage 270. A cet effet, dans la forme de réalisation considérée ici, la partie amont 220.1 du noyau 220, en particulier une extrémité amont de l'arbre central 221, est partiellement reçue dans le logement interne 261 du divergent mâle 260, en y étant supportée et guidée en rotation par la paroi pleine 262 qui sépare le logement interne 261 vis-à-vis du passage 270. Le logement interne 261 étant ici étagé, un palier 290, notamment un palier lisse, est avantageusement interposé radialement entre la partie amont 220.1 du noyau 220, en particulier l'extrémité amont précitée de l'arbre central 221, et la paroi pleine 262 du divergent mâle 260.

En pratique, comme bien visible sur la figure 6, une rondelle de glissement 292 est avantageusement interposée axialement entre le divergent mâle 260 et la partie amont 220.1 du noyau 220 : cette rondelle 292 permet de découpler en rotation le divergent mâle 260 et le noyau 220 l'un de l'autre. Ici, cette rondelle de glissement 292 est interposée axialement entre un épaulement d'extrémité amont 222A de l'organe d'étagement 222 du noyau 220, s'étendant radialement en retrait de la surface extérieure 220A de la partie amont 220.1 du noyau 220, et la bague 266 du divergent mâle 260, tout en prévoyant que la surface extérieure 266A de la bague 266 et une surface extérieure 292A de la rondelle de glissement 292 sont affleurantes avec la surface extérieure 220A de la partie amont 220.1 du noyau 220 : de cette façon, le découplage rotatif entre le divergent mâle 260 et le noyau 220 est efficace, sans induire de pertes de charge, ni de perturbations dans l'écoulement de la matière dans l'extrémité amont 230A du canal 230.

De plus, pour étancher le découplage rotatif entre le divergent mâle 260 et le noyau 220 et éviter ainsi toute fuite substantielle de la matière traversant la filière 200, cette dernière comporte avantageusement un organe d'étanchéité 294 qui est plus particulièrement visible à la figure 6. En pratique, la forme de réalisation de cet organe d'étanchéité n'est pas limitative, l'organe d'étanchéité 294 pouvant ainsi comprendre un seul joint torique, comme illustré aux figures, que comprendre plusieurs joints toriques et/ou un joint quadrilobé et/ou une garniture mécanique et/ou etc. Dans tous les cas, comme bien visible sur la figure 6, cet organe d'étanchéité 294 est reçu dans une gorge périphérique 223 de la partie amont 220.1 du noyau 220, cette gorge périphérique 223 étant ici délimitée à une extrémité amont de l'organe d'étagement 222. De plus, l'organe d'étanchéité 294 est appliqué radialement contre la bague 266 du divergent mâle 260, plus précisément contre une surface intérieure 266B de cette bague 266. Pour faciliter le nettoyage de la gorge périphérique 223 et/ou la maintenance de l'organe d'étanchéité 294, la gorge 223 est délimitée axialement par un organe dédié 296 qui est avantageusement rapporté de manière démontable sur la partie amont 220.1 du noyau 220 : ici, comme bien visible sur la figure 6, cet organe dédié 296 comporte un anneau d'arrêt 297, retenu axialement sur l'organe d'étagement 222 du noyau 220, et une rondelle de glissement 298, axialement interposée entre l'anneau d'arrêt 297 et l'organe d'étanchéité 294.

Bien entendu, la forme de réalisation de l'organe d'étanchéité 294, détaillée ci-dessus est spécifique à l'exemple illustré aux figures. On comprend que, plus généralement, la filière 200 comprend avantageusement un organe d'étanchéité, tel que l'organe d'étanchéité 294, conçu pour étancher l'interface mécanique de découplage rotatif entre le divergent mâle 260 et le noyau 220.

On va maintenant décrire le fonctionnement de la machine d'extrusion 10.

Les ingrédients de la matière première 3 sont introduits à l'intérieur du fourreau 110 puis sont entrainés vers l'aval par les vis 120, tout en étant transformés sous l'effet du traitement thermomécanique appliqué par le fourreau et les vis. La matière 5 sortant du fourreau 110 est poussée, par les vis 120, à travers la filière 200, en entrant dans cette dernière par l'entrée centrale 211 et en s'écoulant dans la filière 200 successivement dans le passage 270 et dans le canal 230.

Dans le passage 270, la matière formant le flux de matière 6 est distribuée tout autour de l'axe X-X, tout en s'écartant de l'axe X-X vers l'aval, pour atteindre l'extrémité amont 230A du canal 230. La poussée hydrostatique du flux de matière 6 génère des contraintes axiales sur le divergent mâle 260, qui sont intégralement transmises à l'enveloppe 210 et, par-là, à la structure porteuse 240, sans transiter par le noyau 220.

Dans le canal 230, la matière forme le flux de matière 7 et s'écoule de l'extrémité amont 230A à l'extrémité aval 230B du canal 230, où la matière sort à l'extérieur de l'enveloppe 210 pour former le produit alimentaire 1. Au fur et à mesure de son écoulement dans le canal 230, la matière du flux de matière 7 est cisaillée du fait de l'entrainement en rotation autour de l'axe X-X du noyau 220 par la motorisation 250, le flux de matière 7 s'enroulant ainsi en hélice autour de l'axe X-X vers l'aval. Les considérations techniques relatives à ce cisaillement sont expliquées en détail dans WO 2022/018084 et WO 2023/006713 auxquelles le lecteur peut utilement se référer. Dans tous les cas, la fibration de la matière du flux de matière 7, résultant de ce cisaillement, est maitrisée du fait, notamment, du positionnement et du guidage en rotation du noyau 220 par rapport à l'enveloppe 210 grâce au divergent mâle 260.

On notera que, au niveau des lumières 264 par lesquelles le flux de matière 6 franchit la bride périphérique 263 lors de son écoulement dans le passage 270, le flux de matière 6 est localement interrompu, autour de l'axe X-X, par les pattes 265. Autrement dit, les pattes 265 forment des obstacles ponctuels pour le flux de matière 6, qui sont situés ici immédiatement en amont de l'extrémité 230A du canal 230. On comprend que le flux de matière 6, qui se subdivise par découpe en franchissant la bride périphérique 263 pour contourner les pattes 265, tend à se rejointer tout autour de l'axe X-X en aval des pattes 265. Dès lors, la filière 200 permet, dans une certaine mesure, de tirer profit de cette situation. En effet, dans la mesure où le flux de matière 7 est commandable pour s'enrouler en hélice autour de l'axe X-X vers l'aval, moyennant le pilotage de la motorisation 250, le rejointement du flux de matière en aval des pattes 265 est aisé à maîtriser dans le flux de matière 7, en jouant sur la vitesse d'entraînement en rotation du noyau 220. Il est ainsi possible, dans les limites rhéologiques de la matière effectivement extrudée et en fonction, d'une part, des paramètres opératoires de la filière 200, en particulier la vitesse d'entraînement en rotation du noyau 220 et, d'autre part, du dimensionnement des pattes 265, d'obtenir à la sortie du canal 230 aussi bien un flux de matière totalement homogène autour de l'axe, c'est-à-dire sans trace perceptible du franchissement de la bride périphérique 263, qu'un flux de matière intégrant des lignes de découpe, plus ou moins marquées, résultant de la présence des pattes 265.

Dans le prolongement immédiat de ce qui précède, on notera que la forme des pattes 265 n'est pas limitée à celle de l'exemple illustré aux figures. Au contraire, on comprend que de multiples géométries sont envisageables pour les pattes 265. De telles géométries permettent notamment de plus ou moins marquer les lignes de découpe précitées. De telles géométries permettent aussi le cas échéant de participer à des considérations d'hygiène, selon leur influence sur la facilité de nettoyage des pattes 265 et/ou sur l'accumulation/évacuation de matière au niveau des pattes 265. A titre d'exemples non limitatifs, plutôt que, comme dans l'exemple illustré aux figures, chacune des pattes 265 présente, sur son côté amont, une facette plane inscrite dans un plan géométrique perpendiculaire à l'axe X-X, chacune des pattes 265 peut être conformée de manière pointue ou bombée vers l'amont, en s'évasant progressivement vers l'aval, notamment à la façon d'une étrave de bateau. L'invention englobe ces diverses géométries pour les pattes 265.

Enfin, divers aménagements et variantes à la machine d'extrusion 10 décrite jusqu'ici sont par ailleurs envisageables. À titre d'exemples, on liste ci-après divers aspects correspondants, qui peuvent être considérés isolément avec ce qui précède, ou bien en combinaison entre eux :
- Plutôt que d'être intégralement lisses comme dans l'exemple illustré aux figures, la surface extérieure 260A du divergent mâle 260 et/ou la surface intérieure 212A du divergent femelle 212 peuvent présenter un état de surface non lisse, notamment pour agir sur l'écoulement du flux de matière 6 au fur et à mesure que ce dernier progresse dans le passage 270, en divergeant de l'axe X-X vers l'aval et se répartissant autour de l'axe X-X. Ainsi, la surface extérieure 260A et/ou la surface intérieure 212A peuvent notamment être pourvues, pour l'une et/ou l'autre, de nervures saillantes qui s'étendent chacune en longueur de manière parallèle à l'axe X-X ou bien de manière inclinée par rapport à l'axe X-X ou bien encore de manière enroulée autour de l'axe X-X. De telles nervures peuvent le cas échant rejoindre les pattes 265 et ainsi participer à une pré-orientation de la matière vis-à-vis des lignes de découpe précitées.
- Comme évoqué plus haut, plutôt que par la bride périphérique 263, la solidarisation fixe entre le divergent mâle 260 et l'enveloppe 210 est réalisable par divers aménagements, tels qu'un boulonnage du divergent mâle 260 sur le divergent femelle 212.
- A la différence de ce qui est schématiquement illustré aux figures 1 et 2, la surface intérieure 220A du noyau 220 peut légèrement émerger, vers l'aval, de l'extrémité aval 210B de l'enveloppe 210 et/ou se prolonger vers l'aval par un déflecteur de sortie de manière à exercer une contre-pression vis-à-vis de l'écoulement de la matière sortant du canal 230. A cet égard, le lecteur peut utilement se reporter à WO 2022/018084 et WO 2023/006713.

- Le noyau 220 peut être équipé d'un outil de morcellement de la matière sortant à l'extérieur de l'enveloppe 210, cet outil de morcellement mettant à profit l'entrainement en rotation du noyau 220 pour agir sur le produit alimentaire 1 à sa sortie du canal 230.
- Le noyau 220 peut inclure plusieurs modules successifs suivant l'axe X-X, comme enseigné dans WO 2022/018084 et WO 2023/006173 auxquels le lecteur peut se référer à cet égard.
- Plutôt que d'être cylindriques à base circulaire, l'une et/ou l'autre de la surface intérieure 213A de l'enveloppe 210 et de la surface extérieure 220A du noyau 220 peuvent être tronconiques, en étant centrées sur l'axe X-X et divergentes vers l'aval, comme expliqué en détail dans WO 2023/006173 auquel le lecteur peut se référer pour plus de détail.
- Quelle que soit la forme de réalisation de l'enveloppe 210 et du noyau 220, l'une et/ou l'autre de l'enveloppe 210 et de la partie amont 220.1 du noyau 120 peuvent être thermorégulées, c'est-à-dire chacune conçue pour commander leur température de manière à, au moins localement, la maintenir à une valeur déterminée avantageusement réglable, malgré les échanges thermiques avec leur environnement immédiat. De cette façon, l'enveloppe 210 et/ou la partie amont 220.1 du noyau 220 sont capables d'agir sur la température dans le canal 230, plus précisément sur la température du flux de matière 7, moyennant un échange thermique avec la matière au travers de, respectivement, la surface intérieure 213A et la surface extérieure 220A. Des détails pratiques relatifs à une telle thermorégulation sont donnés dans WO 2022/018084 et WO 2023/006713 auxquels le lecteur peut utilement se référer. Bien entendu, la thermorégulation de l'enveloppe 210 englobe la thermorégulation potentielle du divergent femelle 212. Quant au divergent mâle 260, sa thermorégulation est optionnellement envisageable, soit depuis l'enveloppe 210 via des aménagements dédiés à l'interface entre la partie amont 220.1 du noyau 220 et le divergent mâle 260, tels que des joints tournants.

## Revendications

1. Filière (200) pour l'extrusion d'une matière riche en protéines et en eau, comportant :
- une enveloppe (210), qui est tubulaire, en étant centrée sur un axe (X-X), et qui est pourvue d'une entrée centrale (211) par laquelle la matière entre à l'intérieur de l'enveloppe pour être poussée à travers la filière, et
- un noyau (220), qui est coaxial avec l'enveloppe et monté rotatif autour de l'axe par rapport à l'enveloppe,
dans laquelle le noyau (220) inclut une partie amont (220.1), s'étendant au moins partiellement à l'intérieur de l'enveloppe (210) de façon que, entre une surface intérieure (213A) de l'enveloppe et une surface extérieure (220A) du noyau, est délimité un canal (230) ayant une section transversale qui est annulaire et centrée sur l'axe (X-X), lequel canal inclut une extrémité amont (230A) et une extrémité aval (230B), qui sont opposées l'une à l'autre suivant l'axe et entre lesquelles la matière poussée à travers la filière s'écoule dans le canal en progressant de l'extrémité amont jusqu'à l'extrémité aval du canal, et
dans laquelle le noyau (220) inclut également une partie aval (220.2), s'étendant à l'extérieur de l'enveloppe (210) et accouplée à une motorisation (250) de la filière, adaptée pour entrainer le noyau en rotation autour de l'axe (X-X),
**caractérisée en ce que** la filière (200) comporte en outre un divergent mâle (260) qui est :
- solidarisé fixement à l'enveloppe (210) et reçu coaxialement à l'intérieur de l'enveloppe de sorte que, entre le divergent mâle et l'enveloppe, est délimité un passage (270), par lequel sont reliées l'entrée centrale (211) de l'enveloppe et l'extrémité amont (230A) du canal (230) et qui est façonné de manière que la matière poussée à travers la filière progresse dans le passage, depuis l'entrée centrale de l'enveloppe vers l'extrémité amont du canal, en formant un flux de matière (6) qui diverge de l'axe (X-X) vers l'aval et se répartit autour de l'axe, et
- abouté axialement à la partie amont (220.1) du noyau (220), en supportant et en guidant en rotation le noyau.

2. Filière suivant la revendication 1 dans laquelle le divergent mâle (260) délimite un logement interne (261), qui est séparé du passage (270) et dans lequel la partie amont (220.1) du noyau (220) est reçue en étant supportée et guidée en rotation.

3. Filière suivant la revendication 2, dans laquelle la filière (200) comporte en outre un palier (290), qui est centré sur l'axe (X-X) et qui est radialement interposé entre la partie amont (220.1) du noyau (220) et une paroi (262) du divergent mâle (260), délimitant le logement interne (261).

4. Filière suivant l'une quelconque des revendications précédentes, dans laquelle le passage (270) est délimité par une surface extérieure (260A) du divergent mâle (260), qui est conique en étant centrée sur l'axe (X-X) et divergente vers l'aval.

5. Filière suivant l'une quelconque des revendications précédentes, dans laquelle l'enveloppe (210) comprend un fourreau de filière (213), qui délimite ladite surface intérieure (213A) de l'enveloppe, et dans laquelle l'enveloppe (210) inclut également un divergent femelle (212) :
- qui est solidarisé fixement au fourreau de filière (213),
- qui est pourvu de l'entrée centrale (211) de l'enveloppe, et
- à l'intérieur duquel le divergent mâle (260) est agencé coaxialement de manière à délimiter le passage (270) entre le divergent femelle et le divergent mâle.

6. Filière suivant l'une quelconque des revendications précédentes, dans laquelle le divergent mâle (260) est solidarisé fixement à l'enveloppe (210) par des parties respectives du divergent mâle et de l'enveloppe, dont l'une et/ou l'autre sont ajourées pour être franchies par ledit flux de matière (6).

7. Filière suivant l'une quelconque des revendications précédentes, dans laquelle le divergent mâle (260) inclut une bride périphérique (263) :
- par laquelle le divergent mâle est solidarisé fixement à l'enveloppe (210),
- qui s'étend, transversalement à l'axe (X-X), en travers dudit flux de matière (6), et
- qui est traversée par le passage (270) via des lumières (264) de la bride périphérique (263), qui sont réparties autour de l'axe (X-X) et par lesquelles ledit flux de matière (6) franchit la bride périphérique.

8. Filière suivant les revendications 6 et 7 prises ensemble, dans laquelle la bride périphérique (263) est axialement pincée entre le fourreau de filière (213) et le divergent femelle (212) de l'enveloppe (210).

9. Filière suivant l'une quelconque des revendications précédentes, dans laquelle la filière (200) comporte également un organe d'étanchéité (294) qui est conçu pour étancher une interface mécanique de découplage rotatif entre le divergent mâle (260) et le noyau (220).

10. Filière suivant la revendication 9, dans laquelle l'organe d'étanchéité (294) est :
- reçu dans une gorge périphérique (223) de la partie amont (220.1) du noyau (220), et
- appliqué radialement contre une bague (266) du divergent mâle (260), cette bague ayant une surface extérieure (266A) qui est affleurante avec ladite surface extérieure (220A) de la partie amont (220.1) du noyau (220).

11. Système de préparation en continu d'un produit alimentaire (1) extrudé, comprenant :
- une matière première (3) qui est riche en protéines et en eau,
- un extrudeur (100) comportant au moins une vis (120) et un fourreau d'extrudeur (110) à l'intérieur duquel ladite au moins une vis est entrainable en rotation de manière à appliquer un traitement thermomécanique à la matière première, et
- une filière (200), qui est conforme à l'une quelconque des revendications précédentes et dont l'enveloppe (210) est solidarisée fixement au fourreau d'extrudeur (110) de manière que, en sortie du fourreau d'extrudeur, la matière est poussée par ladite au moins une vis à travers la filière via l'entrée centrale (211) de l'enveloppe.

## Patentansprüche

1. Extrusionsdüse (200) zum Extrudieren eines an Proteinen und Wasser reichen Materials, umfassend:
- eine Hülle (210), die rohrförmig ist, wobei sie auf einer Achse (X-X) zentriert ist, und die mit einer zentralen Eingangsöffnung (211) versehen ist, durch die das Material in das Innere der Hülle eintritt, um durch die Extrusionsdüse gedrückt zu werden, und
- einen Kern (220), der koaxial mit der Hülle ist und um die Achse in Bezug auf die Hülle drehbar montiert ist,
wobei der Kern (220) einen stromaufwärtigen Teil (220.1) einschließt, der sich zumindest teilweise im Inneren der Hülle (210) derart erstreckt, dass zwischen einer Innenfläche (213A) der Hülle und einer Außenfläche (220A) des Kerns ein Kanal (230) begrenzt ist, der einen Querschnitt aufweist, der ringförmig und auf der Achse (X-X) zentriert ist, wobei der Kanal ein stromaufwärtiges Ende (230A) und ein stromabwärtiges Ende (230B) einschließt, die entlang der Achse einander gegenüberliegen und zwischen denen das durch die Extrusionsdüse gedrückte Material in dem Kanal strömt, indem es von dem stromaufwärtigen Ende bis zu dem stromabwärtigen Ende des Kanals voranschreitet, und
wobei der Kern (220) ebenfalls einen stromabwärtigen Teil (220.2) einschließt, der sich außerhalb der Hülle (210) erstreckt und mit einer Antriebseinheit (250) der Extrusionsdüse gekoppelt ist, die geeignet ist, den Kern drehend um die Achse (X-X) anzutreiben,
**dadurch gekennzeichnet, dass** die Extrusionsdüse (200) ferner ein männliches Divergenzelement (260) umfasst, das:
- fest mit der Hülle (210) verbunden ist und koaxial im Inneren der Hülle aufgenommen ist, so dass zwischen dem männlichen Divergenzelement und der Hülle ein Durchgang (270) begrenzt ist, durch den die zentrale Eingangsöffnung (211) der Hülle und das stromaufwärtige Ende (230A) des Kanals (230) verbunden sind und der derart geformt ist, dass das durch die Extrusionsdüse gedrückte Material in dem Durchgang von der zentralen Eingangsöffnung der Hülle zu dem stromaufwärtigen Ende des Kanals voranschreitet, indem es einen Materialstrom (6) bildet, der von der Achse (X-X) nach stromabwärts divergiert und sich um die Achse verteilt, und
- axial an den stromaufwärtigen Teil (220.1) des Kerns (220) angesetzt ist, wobei es den Kern trägt und drehend führt.

2. Extrusionsdüse nach Anspruch 1, wobei das männliche Divergenzelement (260) einen Innenraum (261) begrenzt, der von dem Durchgang (270) getrennt ist und in dem der stromaufwärtige Teil (220.1) des Kerns (220) aufgenommen ist, wobei er drehend getragen und geführt ist.

3. Extrusionsdüse nach Anspruch 2, wobei die Extrusionsdüse (200) ferner ein Lager (290) umfasst, das auf der Achse (X-X) zentriert ist und das radial zwischen dem stromaufwärtigen Teil (220.1) des Kerns (220) und einer Wand (262) des männlichen Divergenzelements (260), die den Innenraum (261) begrenzt, angeordnet ist.

4. Extrusionsdüse nach einem der vorhergehenden Ansprüche, wobei der Durchgang (270) durch eine Außenfläche (260A) des männlichen Divergenzelements (260) begrenzt ist, die konisch ist, wobei sie auf der Achse (X-X) zentriert ist und nach stromabwärts divergiert.

5. Extrusionsdüse nach einem der vorhergehenden Ansprüche, wobei die Hülle (210) einen Düsenmantel (213) umfasst, der die Innenfläche (213A) der Hülle begrenzt, und wobei die Hülle (210) ebenfalls ein weibliches Divergenzelement (212) einschließt:
- das fest mit dem Düsenmantel (213) verbunden ist,
- das mit der zentralen Eingangsöffnung (211) der Hülle versehen ist, und
- in dessen Innerem das männliche Divergenzelement (260) koaxial angeordnet ist, um den Durchgang (270) zwischen dem weiblichen Divergenzelement und dem männlichen Divergenzelement zu begrenzen.

6. Extrusionsdüse nach einem der vorhergehenden Ansprüche, wobei das männliche Divergenzelement (260) durch jeweilige Teile des männlichen Divergenzelements und der Hülle fest mit der Hülle (210) verbunden ist, von denen die einen und/oder die anderen durchbrochen sind, um von dem Materialstrom (6) durchquert zu werden.

7. Extrusionsdüse nach einem der vorhergehenden Ansprüche, wobei das männliche Divergenzelement (260) einen peripheren Flansch (263) einschließt:
- durch den das männliche Divergenzelement fest mit der Hülle (210) verbunden ist,
- der sich quer zu der Achse (X-X) quer zu dem Materialstrom (6) erstreckt, und
- der durch den Durchgang (270) über Öffnungen (264) des peripheren Flansches (263) durchquert wird, die um die Achse (X-X) verteilt sind und durch die der Materialstrom (6) den peripheren Flansch durchquert.

8. Extrusionsdüse nach den Ansprüchen 6 und 7 zusammengenommen, wobei der periphere Flansch (263) axial zwischen dem Düsenmantel (213) und dem weiblichen Divergenzelement (212) der Hülle (210) eingeklemmt ist.

9. Extrusionsdüse nach einem der vorhergehenden Ansprüche, wobei die Extrusionsdüse (200) ebenfalls ein Dichtungselement (294) umfasst, das dazu ausgelegt ist, eine mechanische Schnittstelle der Drehentkopplung zwischen dem männlichen Divergenzelement (260) und dem Kern (220) abzudichten.

10. Extrusionsdüse nach Anspruch 9, wobei das Dichtungselement (294):
- in einer peripheren Nut (223) des stromaufwärtigen Teils (220.1) des Kerns (220) aufgenommen ist, und
- radial gegen einen Ring (266) des männlichen Divergenzelements (260) angelegt ist, wobei dieser Ring eine Außenfläche (266A) aufweist, die bündig mit der Außenfläche (220A) des stromaufwärtigen Teils (220.1) des Kerns (220) ist.

11. System zur kontinuierlichen Herstellung eines extrudierten Lebensmittelprodukts (1), umfassend:
- ein Rohmaterial (3), das reich an Proteinen und Wasser ist,
- einen Extruder (100), der mindestens eine Schnecke (120) und einen Extrudermantel (110) umfasst, in dessen Innerem die mindestens eine Schnecke drehend antreibbar ist, um eine thermomechanische Behandlung auf das Rohmaterial anzuwenden, und
- eine Extrusionsdüse (200), die einem der vorhergehenden Ansprüche entspricht und deren Hülle (210) fest mit dem Extrudermantel (110) verbunden ist, so dass am Ausgang des Extrudermantels das Material durch die mindestens eine Schnecke durch die Extrusionsdüse über die zentrale Eingangsöffnung (211) der Hülle gedrückt wird.

## Claims

1. A die (200) for extruding a material high in proteins and in water, comprising:
- a casing (210), which is tubular, centered on an axis (X-X), and which is provided with a central inlet (211) through which the material enters the interior of the casing to be pushed through the die, and
- a core (220), which is coaxial with the casing and mounted rotatably about the axis relative to the casing,
wherein the core (220) includes an upstream part (220.1) extending at least partially within the casing (210) such that a channel (230) is delimited between an inner surface (213A) of the casing and an outer surface (220A) of the core, said channel (230) having a cross-section which is annular and centered on the axis (X-X), wherein said channel includes an upstream end (230A) and a downstream end (230B) which are axially opposed to each other and between which material pushed through the die flows into the channel from the upstream end to the downstream end of the channel, and
wherein the core (220) also includes a downstream part (220.2), extending outside the casing (210) and coupled to a motor-drive (250) of the die, suitable for driving the core in rotation about the axis (X-X),
**characterized in that** the die (200) further includes a male divergent part (260) which is:
- fixedly secured to the casing (210) and coaxially received inside the casing in such a way that, between the male divergent part and the casing, a passage (270) is delimited, through which the central inlet (211) of the casing and the upstream end (230A) of the channel (230) are connected and which is shaped in such a way that the material pushed through the die flows into the passage, from the central inlet of the casing toward the upstream end of the channel, forming a flow of material (6) which diverges from the axis (X-X) toward the downstream and is distributed around the axis, and
- abutted axially to the upstream part (220.1) of the core (220), supporting and guiding the core in rotation.

2. The die according to claim 1 wherein the male divergent part (260) delimits an internal housing (261), which is separated from the passage (270) and wherein the upstream part (220.1) of the core (220) is received while being supported and guided in rotation.

3. The die according to claim 2, wherein the die (200) further includes a bearing (290), which is centered on the axis (X-X) and which is radially interposed between the upstream part (220.1) of the core (220) and a wall (262) of the male divergent part (260), delimiting the internal housing (261).

4. The die according to any of the preceding claims, wherein the passage (270) is delimited by an outer surface (260A) of the male divergent part (260) which is conical being centered on the axis (X-X) and diverging toward the downstream.

5. The die according to any of the preceding claims, wherein the casing (210) comprises a die sleeve (213) which delimits said inner surface (213A) of the casing, and wherein the casing (210) also includes a female divergent part (212):
- which is fixedly secured to the die sleeve (213),
- which is provided with the central inlet (211) of the casing, and
- inside which the male divergent part (260) is fitted coaxially so as to delimit the passage (270) between the female divergent part and the male divergent part.

6. The die according to any of the preceding claims, wherein the male divergent part (260) is fixedly secured to the casing (210) by respective parts of the male divergent part and of the casing, one and/or the other of which are perforated in order to be crossed by said flow of material (6).

7. The die according to any of the preceding claims, wherein the male divergent part (260) includes a peripheral flange (263):
- by means of which the male divergent is fixedly secured to the casing (210),
- which extends, transversely to the axis (X-X), across said flow of material (6), and
- which is traversed by the passage (270) via apertures (264) in the peripheral flange (263), which are distributed around the axis (X-X) and through which said flow of material (6) crosses the peripheral flange.

8. The die according to claims 6 and 7 taken together, wherein the peripheral flange (263) is axially caught between the die sleeve (213) and the female divergent part (212) of the casing (210).

9. The die according to any of the preceding claims, wherein the die (200) also includes a sealing member (294) designed to seal a mechanical rotating uncoupling interface between the male divergent part (260) and the core (220).

10. The die according to claim 9, wherein the sealing member (294) is:
- received in a peripheral groove (223) of the upstream part (220.1) of the core (220), and
- applied radially against a ring (266) of the male diverging part (260), the ring having an outer surface (266A) which is flush with said outer surface (220A) of the upstream part (220.1) of the core (220).

11. A system for the continuous preparation of an extruded food product (1), comprising:
- a raw material (3) that is rich in proteins and in water,
- an extruder (100) including at least one screw (120) and an extruder sleeve (110) inside which the at least one screw can be rotated so as to apply a thermomechanical processing to the raw material, and
- a die (200), which is according to any of the preceding claims and the outer casing (210) of which is fixedly secured to the extruder sleeve (110) in such a way that, at the outlet of the extruder sleeve, the material is pushed by said at least one screw through the die via the central inlet (211) of the casing.
